# EUROPEAN PATENT APPLICATION

(11) **EP 4 084 134 A1**
(43) Date of publication of application: **02.11.2022**
(21) Application number: 19957677.8
(22) Date of filing: 26.12.2019
(51) Int. Cl.: H01M 4/36, H01M 4/525, H01M 4/62, H01M 10/052, C01G 53/00, C01G 51/00

(54) **CATHODE ACTIVE MATERIAL, METHOD FOR MANUFACTURING SAME, AND LITHIUM SECONDARY BATTERY COMPRISING CATHODE CONTAINING SAME**

(30) Priority: 24.12.2019 KR 20190174169
(71) Applicant: SM Lab Co., Ltd., Ulsan 44953 (KR)
(72) Inventor: SEO, Min Ho, Hanam-si, Gyeonggi-do 12946 (KR); KIM, Ji Young, Ulju-gun, Ulsan 44920 (KR)
(74) Representative: Loyer & Abello
(86) International application number: PCT/KR2019/018508
(87) International publication number: WO 2021/132761

(57) **Abstract**

The present disclosure relates to a positive active material, a method of preparing the same, and a lithium secondary battery having a positive electrode including the positive active material, the positive active material including: a lithium transition metal oxide having a portion of Li substituted by Na, and including Ni and Co; and a cobalt-containing coating layer arranged on the surface of the lithium transition metal oxide particle, wherein the lithium transition metal oxide particle includes a concentration gradient region in which the concentration of Co decreases in a direction from the surface to the center of the particle.

## Description

### TECHNICAL FIELD

The present disclosure relates to a positive active material with a novel composition, a method of preparing the same, and a lithium secondary battery having a positive electrode including the positive active material.

The present disclosure was made with funds from the Korean Ministry of Trade, Industry, and Energy under Project No. P0009541 titled "Development of high strength/long life/high stability Ni-Rich NCA (> 210mAh/g, @ 4.3V) positive electrode material for medium-to-large sized lithium secondary battery".

### BACKGROUND ART

Lithium secondary batteries were commercialized by Sony in 1991, and demand has been rapidly increasing from a variety of fields from small appliances such as mobile IT products to medium-to-large sized electric vehicles and energy storage systems. Particularly, although a low-cost high-energy positive electrode material is essential for medium-to-large sized electric vehicles and energy storage systems, cobalt, the main raw material of monocrystalline LiCoO₂ (LCO), which is a currently commercialized positive active material, is expensive.

Therefore, as a positive active material for a medium-to-large sized secondary battery, Ni-based positive active materials represented by LiNiₓCo_{y}Mn_{z}O₂ (NCM, x+y+z=1) and LiNiₓCo_{y}Al_{z}O₂ (NCA, x+y+z=1), in which some Co is substituted with other transition metals, is used instead of LCO, and these NCM and NCA based-positive active materials have an advantage in that nickel, the main raw material, is inexpensive and has a high reversible capacity. In particular, NCM and NCA, which have 50 mol% or more of Ni, are attracting attention in terms of high capacity. Generally, such Ni-based positive active materials are prepared by mixing a transition metal compound precursor synthesized by a co-precipitation method with a lithium source and then synthesizing by using a solid-phase synthesis method. However, the synthesized Ni-based positive electrode material is present in the form of secondary particles, which are formed by aggregation of small primary particles, and in the long term, there is an issue of micro-cracks forming inside the secondary particles during charge/discharge processes. Micro-cracks induce side reactions between a new interface and an electrolyte solution, resulting in deterioration of battery performance, such as reduced stability due to generation of gas and degradation of battery performance due to electrolyte solution depletion. In addition, an increase in electrode density (> 3.3 g/cc), which is required for the implementation of high energy density, causes a plunge in the initial lifespan by inducing the collapse of the secondary particles and depletion of the electrolyte solution due to side reactions with the electrolyte solution. In the end, Ni-based positive active materials in the form of secondary particles synthesized by a co-precipitation method in the art are not capable of implementing high energy density.

In order to solve the problems of the Ni-based positive active materials in the form of secondary particles, monocrystalline Ni-based positive active materials have been studied recently. Monocrystalline Ni-based positive active materials are capable of implementing excellent electrochemical performance, because particles do not collapse when electrode density increases (> 3.3 g/cc) in order to implement high energy density. However, such monocrystalline Ni-based positive active materials, when electrochemically evaluated, have issues of structural and/or thermal instability due to unstable Ni³⁺ and Ni⁴⁺ ions leading to reduced battery stability. Therefore, for the development of high-energy lithium secondary batteries, there is still a demand for technologies for stabilizing unstable Ni ions of monocrystalline Ni-based positive active materials.

### DESCRIPTION OF EMBODIMENTS

### TECHNICAL PROBLEM

An aspect is to provide positive active materials in which unstable Ni ions of monocrystalline Ni-based positive active materials are stabilized, cracks of particles that form during a charge/discharge process are suppressed by improved structural stability due to Co-concentration gradient region in the positive active materials and the Co-containing coating layer arranged on the surface of the positive active materials, and high energy density is implemented and long-life characteristics are enhanced.

### SOLUTION TO PROBLEM

According to an aspect, a positive active material is provided, the positive active material including: a lithium transition metal oxide particle having a portion of Li substituted by Na, and including Ni and Co;
a cobalt-containing coating layer arranged on the surface of the lithium transition metal oxide particle, wherein
the lithium transition metal oxide particle includes a concentration gradient region, in which concentration of Co is decreased in a direction from the surface to the center of the particle.

According to another aspect, a method of preparing a positive active material is provided, the method including: preparing a lithium transition metal oxide particle having a portion of Li substituted by Na, and including Ni and Co;
obtaining a positive active material precursor by mixing the lithium transition metal oxide particle and a Co-containing compound; and
obtaining a positive active material by heat-treating the precursor of a positive active material, wherein
the positive active materials includes a Co-containing coating layer, and a concentration gradient region in which concentration of Co is decreased in a direction from the surface to the center of the particle.

According to still another aspect, a lithium secondary battery is provided, the lithium secondary battery including: a positive electrode including the positive active material; a negative electrode; and an electrolyte.

### ADVANTAGEOUS EFFECTS OF DISCLOSURE

A positive active material according to an aspect of the present disclosure includes: a lithium transition metal oxide particle which is a single crystal and a single particle, wherein a portion of Li in the single crystal is substituted by Na; a concentration gradient region in which concentration of Co in the transition metal is decreased in a direction from the surface of the lithium transition metal oxide particle to the center of the particle; and a cobalt-containing coating layer on the surface of the lithium transition metal oxide particle, and thus, cracks of particles that form during a charge/discharge process are suppressed, and unstable Ni ions present in a high-Ni-based lithium transition metal oxide are stabilized, and therefore, capacity per volume is increased and lifespan stability is improved.

### BRIEF DESCRIPTION OF DRAWINGS

FIG. 1 is scanning electron microscope (SEM) images of positive active materials of Example 1 and Comparative Example 1.
FIG. 2 is a graph showing particle size distribution of positive active materials of Example 1 and Comparative Example 1.
FIG. 3 is a high resolution transmission electron microscopy (HR-TEM) image of the positive active material of Comparative Example 1.
FIG. 4 is an HR-TEM image of the positive active material of Example 1.
FIG. 5A is an HR-TEM image of the positive active material of Example 1; and FIG. 5B is an energy dispersive X-ray spectroscopy (EDX) images of the positive active material of Example 1.
FIG. 6A is an HR-TEM image of the positive active material of Example 1; and FIG. 6B is fast Furier transform (FFT) images of the positive active material of Example 1.
FIG. 7 is a graph of lifespan retention rate of half-cells of Example 4 and Comparative Examples 11 to 15.
FIG. 8 is a graph of lifespan retention rate of half-cells of Example 4 and Comparative Examples 16 to 18.
FIG. 9 is a graph of lifespan retention rate of half-cells of Example 5 and Comparative Example 19.
FIG. 10 is a graph of lifespan retention rate of half-cells of Example 6 and Comparative Example 20.
FIG.11 is a schematic diagram of a lithium battery according to an example embodiment.

### <Explanation of reference numerals designating the major elements of the drawings>

1: Lithium battery 2: Negative electrode
3: Positive electrode 4: Separator
5: Battery Case 6: Cap Assembly

### MODE OF DISCLOSURE

The present inventive concept described hereinafter may be modified in various ways, and may have many examples, and thus, certain examples are illustrated in the drawings, and are described in detail in the specification. However, this does not intend to limit the present inventive concept within particular embodiments, and it should be understood that the present disclosure includes all the modifications, equivalents, and replacements within the idea and technical scope of the present inventive concept.

Terms used herein were used to describe particular examples, and not to limit the present inventive concept. As used herein, the singular of any term includes the plural, unless the context otherwise requires. The expression of "include" or "have" used herein indicates the existence of a characteristic, a number, a phase, a movement, an element, a component, a material or a combination thereof, and it should not be construed to exclude in advance the existence or possibility of existence of at least one of other characteristics, numbers, movements, elements, components, materials or combinations thereof. As used herein, "/" may be interpreted to mean "and" or "or" depending on the context.

In the drawings, a thickness is enlarged or reduced to clearly represent various layers and regions. The same reference numerals were attached to similar portions throughout the disclosure. As used herein throughout the disclosure, when a layer, a film, a region, or a plate is described to be "on" or "above" something else, it not only includes the case that it is right above something else but also the case when other portions are present in-between. Terms like "first", "second", and the like may be used to describe various components, but the components are not limited by the terms. The terms are used merely for the purpose of distinguishing one component from other components.

Unless otherwise defined, all terms used herein (including technological and scientific terms) have the same meaning as commonly understood by those having an average knowledge in the art to which the present disclosure belongs. In addition, it should also be understood that the terms defined in generally used dictionaries should be interpreted to have a meaning that matches with the meaning in the related technology or the context of the present disclosure, and should not be interpreted as having a meaning too idealized or overly formal.

The term "group" means a group of the periodic table of elements according to 1 to 18 group classification system of International Union of Pure and Applied Chemistry (IUPAC).

Although specific embodiments are described, currently unpredicted, or unpredictable alternatives, modifications, variations, improvements, and substantial equivalents, may arise to the applicant or those skilled in the art. Therefore, the appended claims, which may be applied and modified, are intended to include all such alternatives, modifications, variations, improvements and substantial equivalents.

Hereinafter, a positive active material, a method of preparing the same, and a lithium secondary battery including a positive electrode including the positive active material according to example embodiments will be described in more detail.

A positive active material according to an embodiment may include: a lithium transition metal oxide particle in which a portion of Li is substituted by Na, and Ni and Co are included; and a cobalt-containing coating layer arranged on the surface of the lithium transition metal oxide particle, wherein the lithium transition metal oxide particle may include a concentration gradient region in which concentration of Co is decreased in a direction from the surface to the center of the particle.

Since the positive active material has a portion of Li is substituted by Na, structural deformation due to desorption of Li ions during charging is suppressed and long-life characteristics of the positive active material are improved. In addition, as the lithium transition metal oxide particle includes a concentration gradient region in which concentration of Co is decreased in a direction from the surface to the center of the particle, structural stability of the crystal is even more enhanced, the collapse of the crystal is suppressed during charge/discharge processes, the distribution of unstable Ni (III) and Ni (IV) ions are reduced from the surface, the distribution of Ni (II) ions at the center of the core is increased, and thus, side reactions of Ni ions with the electrolyte solution are suppressed, and high capacity of the positive active material is obtained due to high Ni ion contents. Therefore, the positive active material has characteristics of high capacity, and long-life. In addition, as the cobalt-containing coating layer arranged on the surface of the lithium transition metal oxide particle is included, side reactions of the electrolyte solution and the lithium transition metal oxide particles are suppressed, and as a result, deterioration of the positive active material is suppressed, and long-life characteristics of the positive active material are improved.

According to an embodiment, the concentration gradient region may include a region extending to a distance of 500 nm from the surface to the center of the lithium transition metal oxide particle.

For example, the concentration gradient region may include a region extending to a distance of 250 nm from the surface to the center of the lithium transition metal oxide particle.

When the concentration gradient region exists within the distance from the surface of the lithium transition metal oxide particle, high capacity and long-life characteristics of the positive active material are achieved.

According to an embodiment, in the concentration gradient region, concentration of Ni may increase in the direction from the surface of the lithium transition metal oxide particle to the center.

According to an embodiment, in the concentration gradient region, concentration of Co may decrease and concentration of Ni may increase in the direction from the surface of the lithium transition metal oxide particle to the center.

As the Co concentration gradually decreases, and Ni concentration gradually increases from the surface of the lithium transition metal oxide, high capacity and long-life characteristics of the positive active material are achieved.

According to one embodiment, the lithium metal oxide particles may include a lithium transition metal oxide represented by Formula 1:

Formula 1 Li₁₋ₓNaₓM_{1-(α+β+γ)}W_{α}Mg_{β}Ti_{γ}O₂₋ₐSₐ,

wherein in Formula 1, M, x, α, β, γ, and a are as specifically described below.

In the lithium transition metal oxide represented by Formula 1, a portion of Li is substituted by Na, a portion of M is substituted by W, Mg, and Ti, and a portion of O is substituted by S, and when a lithium secondary battery including the same is charged/discharged, structural stability of the lithium transition metal oxide is improved, and thereby, capacity per unit volume is increased and lifespan stability is improved.

In addition, in a high-Ni-based lithium transition metal oxide in which M includes Ni, substitution of small amounts of W, Mg and Ti induces reduction of unstable Ni ions present in the lithium transition metal oxide, such as Ni^{3+,} Ni⁴⁺ to stable forms of nickel ions of Ni²⁺, and thus, deterioration of positive active material and capacity deterioration due to side reactions of unstable Ni ions and electrolyte solution during charge/discharge processes are suppressed.

The lithium transition metal oxide particle includes small amounts of W, Mg, and Ti as transition metals, in addition to having a concentration gradient region, and thus, reduction of unstable Ni ions present in the lithium transition metal oxide, such as Ni^{3+,} Ni⁴⁺ to stable forms of nickel ions of Ni²⁺ is induced, and therefore, deterioration of positive active material may be prevented, and capacity deterioration may be significantly suppressed.

According to an embodiment, in Formula 1, M may be one or more elements selected from alkali metal elements, alkaline earth metal elements, transition metal elements, post-transition metal elements, and non-metallic elements, other than W, Mg, Ti, Na, and S.

For example, M may be one or more selected from K, Rb, Cs, Fr, Be, Ca, Sr, Ba, Ra, Sc, Y, La, Zr, Hf, V, Nb, Ta, Cr, Mo, Mn, Tc, Re, Fe, Ru, Os, Co, Rh, Ir, Ni, Pd, Pt, Cu, Ag, Au, Zn, Cd, Hg, B, Al, Ga, In, TI, C, Si, Ge, Sn, Pb, N, P, As, Sb, Bi, N, P, As, Sb, Bi, Se, Te, and Po.

According to an embodiment, M may be one or more elements selected from alkali metal elements, alkaline earth metal elements, transition metal elements, post-transition metal elements, and non-metallic elements, other than W, Mg, Ti, Na, and S.

For example, M may be one or more selected from Be, Ca, Sr, Ba, Ra, Sc, Y, La, Zr, Hf, V, Nb, Ta, Cr, Mo, Mn, Tc, Re, Fe, Ru, Os, Co, Rh, Ir, Ni, Pd, Pt, Cu, Ag, Au, Zn, Cd, Hg, B, Al, Ga, In, Tl, C, Si, Ge, Sn, Pb, N, P, As, Sb, Bi, N, P, As, Sb, Bi, Se, Te, and Po.

According to an embodiment, M may be one or more elements selected from Ni, Co, Mn, Al, V, Ca, Zr, B, and P.

According to an embodiment, M may be one or more elements selected from Ni, Co, Mn, Al, V, Ca, Zr, B, and P. According to an embodiment, M may be Ni and one or more elements selected from Co, Mn, and Al.

According to an embodiment, x may be 0<x≤0.01. Here, x refers to substitution molar ratio of Na to Li in the lithium transition metal oxide represented by Formula 1. As a portion of Li of the lithium transition metal oxide represented by Formula 1 is substituted by Na, structural stability may be improved. When Li in a lattice space is substituted by Na, because of intervention of Na which has an ionic radius larger than that of Li, the expansion of the crystal structure due to repulsive force between oxygen atoms in a lithium transition metal oxide is suppressed when lithium is desorbed in a charging state, and as a result, structural stability of the lithium transition metal oxide is improved even when charging is repeated.

According to an embodiment, α may be 0< α ≤0.01. Here, a refers to substitution molar ratio of W to an element M in the lithium transition metal oxide represented by Formula 1. When W is substituted within the range, structural stability of the lithium transition metal oxide is improved. When substitution molar ratio of W exceeds 0.01, a decrease in structural stability due to torsion in the crystal structure is induced, and WO₃ is formed as an impurity, and degradation of electrochemical properties may result.

According to an embodiment, β may be 0<β≤0.005. Here, β refers to substitution molar ratio of Mg to an element M in the lithium transition metal oxide represented by Formula 1. When substitution molar ratio of Mg satisfies the range, structural expansion of the lithium transition metal oxide is suppressed in a charging state.

According to an embodiment, γ may be 0<γ≤0.005. Here, γ refers to substitution molar ratio of Ti to an element M in the lithium transition metal oxide represented by Formula 1. When substitution molar ratio of Ti satisfies the range, structural expansion of the lithium transition metal oxide is suppressed in a charging state.

When W, Mg, and Ti substitute the lithium transition metal oxide in the molar ratio, structural expansion of the crystal due to interaction between oxygen molecules in the lithium transition metal oxide is suppressed even when lithium is desorbed, and thus, structural stability and lifespan characteristics are improved.

According to an embodiment, the sum of α, β, and γ may be 0<α + β + γ ≤0.02. For example, the sum of α, β, and γ may be 0<α + β + γ ≤0.016. When α + β + γ satisfies the range, structural stability of the lithium transition metal oxide is guaranteed. When a + β + γ exceeds 0.02, impurities are formed, which not only may act as a resistance when lithium is desorbed, but also may cause a collapse of the crystal structure when charging is repeated.

According to an embodiment, β and γ may be 0< β ≤0.003, 0<γ ≤0.003, respectively.

For example, in Formula 1, it may be that β = γ. When β = γ, for example, when the molar ratios of Mg and Ti are the same, electric charge in the lithium transition metal oxide is balanced during charge/discharge processes, and collapse of the crystal structure is suppressed and structural stability is improved, and as a result, lifespan characteristics are improved.

According to an embodiment, a may be 0<a≤0.01. For example, it may be that 0<a≤0.005, 0<a≤0.003 or 0<a≤0.001. Here, a refers to substitution molar ratio of S to an element O in the lithium transition metal oxide represented by Formula 1.

As a portion of the oxygen element is substituted by S, the binding force with the transition metal is increased, and the transition of the crystal structure of the lithium transition metal oxide is suppressed, and as a result, the structural stability of the lithium transition metal oxide is improved.

On the other hand, when the substitution molar ratio of S exceeds 0.01, the crystal structure becomes unstable due to repulsive force of the negative S ions, and the lifespan characteristics are even lowered.

According to an embodiment, the lithium transition metal oxide may be a single particle. "Single particle" is a concept distinguished from a secondary particle which is formed by aggregation of a plurality of particles, or a particle in which a plurality of particles are aggregated and the perimeter of the aggregate is coated. When the lithium transition metal oxide has a form of a single particle, the particles may be prevented from being broken even at a high electrode density. Therefore, implementation of a high energy density of the positive active material including the lithium transition metal oxide becomes possible. In addition, with a single particle, breaking of particles may be suppressed during rolling, compared to secondary particles, which is formed by aggregation of a plurality of single particles, and thus, implementation of high-energy density becomes possible and lifespan deterioration due to the breaking of the particles may be prevented.

According to an embodiment, the lithium transition metal oxide may have a single crystal. "Single crystal" is a concept distinguished from "single particle". The term "single particle" refers to a particle formed as one particle, regardless of the type and number of the crystals inside, and the term "single crystal" refers to a particle having only one crystal inside. Monocrystalline lithium transition metal oxide not only has a very high structural stability, but also allows easier lithium ion conduction than poly-crystal, and has superior fast charging characteristics compared to polycrystalline active materials.

According to an embodiment, the positive active material is a single crystal and a single particle. When the positive active material is formed as a single crystal and a single particle, a structurally stable and high-density electrode may be implemented, and a lithium secondary battery including the same may have an improved lifespan characteristics and a high energy density.

According to an embodiment, the lithium transition metal oxide may be represented by any one of Formulae 2 to 4.

Formula 2 Li_{1-x'}Na_{x'}Ni_{y1'}Co_{y2'}Mn_{y3'}W_{α'}Mg_{β'}Ti_{γ'}O_{2-a'}S_{a'}

Formula 3 Li_{1-x"}Na_{x"}Ni_{y1"}Co_{y2"}Al_{y3"}W_{α"}Mg_{β"}Ti_{γ"}O_{2-a"}S_{a"}

Formula 4 Li_{1-x‴}Na_{x‴}Ni_{y1‴}Co_{y2‴}W_{α‴}Mg_{β‴}Ti_{γ‴}O_{2-a‴}S_{a‴},

According to an embodiment, in Formula 2,
it may be that 0<x'≤0.01, 0<α'≤0.01, 0<β'≤0.005, 0<γ'≤0.005, 0<a'≤0.01, 0<α'+β'+γ'≤0.02, 0.48≤y1'<1, 0<y2' ≤0.2, 0<y3'≤0.3, and y1'+y2'+y3'+ α'+ β'+ γ'=1.
in Formula 3,
it may be that 0<x"≤0.01, 0<α"≤0.01, 0<β"≤0.005, 0<γ"≤0.005, 0<a"≤0.01, 0<α"+β"+γ"≤0.02, 0.73≤y1"<1, 0<y2" ≤0.2, 0<y3"≤0.05, and y1"+y2"+y3"+ a"+ β"+ γ"=1.
and in Formula 4,
it may be that 0<x‴≤0.01, 0<α‴≤0.01, 0<β‴≤0.005, 0<γ‴≤0.005, 0<a‴≤0.01, 0<α‴+β‴+γ‴≤0.02, 0.78≤y1‴<1, 0<y2‴ ≤0.2, and y1‴+y2‴+ α‴+ β‴+ γ‴=1.

For example, in Formula 2, it may be that 0<β'≤0.003, 0<γ'≤0.003, and 0<α'+β'+γ'≤0.016, in Formula 3, it may be that, 0<β"≤0.003, 0<γ"≤0.003, 0<α"+β"+γ"≤0.016, and in Formula 4, it may be that 0<β‴≤0.003, 0<γ‴≤0.003, and 0<α‴+β‴+γ‴<0.016.

The lithium transition metal oxide satisfying the condition may stabilize unstable Ni ions inside, and have high energy density and long life stability.

In case of a general positive active material including high-nickel-based lithium nickel-cobalt-manganese oxide, stabilization of unstable Ni ions is essential, and when W, Mg and Ti substitute a portion of the transition metal in the crystal, the positive active material may have an overall balance of electric charges so that oxidation of Ni (II) ions to unstable Ni (III) or Ni (IV) ions may be suppressed, and unstable Ni (III) or Ni (IV) ions may be reduced to Ni (II). On the other hand, the loss of conductivity generated by substitution of a portion of the transition metal by W, Mg and Ti, which are heterogeneous elements, is compensated by substituting a portion of O by S, and as portion of Li is substituted by Na, reduction of conductivity of Li due to a structural deformation during charge/discharge processes is suppressed, and thus a monocrystalline, structurally stable, high-capacity and long-life positive active material may be obtained.

According to an embodiment, the average diameter (D₅₀) of the lithium transition metal oxide may be 0.1 µm to 20 µm. For example, the average diameter (D₅₀) may be 0.1 µm to 15 µm, 0.1 µm to 10 µm, 1 µm to 20 µm, 5 µm to 20 µm, 1 µm to 15 µm, 1 µm to 10 µm, 5 µm to 15 µm, or 5 µm to 10 µm. When the average diameter of the lithium transition metal oxide is within the range, a desirable energy density per volume may be implemented. When the average diameter of the lithium transition metal oxide exceeds 20 µm, charge/discharge capacity may plunge, and when the average diameter of the lithium transition metal oxide is less than 0.1 µm, a desirable energy density per volume may be difficult to obtain.

According to an embodiment, the lithium transition metal oxide may further include a cobalt-containing coating layer including a cobalt-containing compound, on the surface.

For example, the cobalt-containing compound may include one or more elements other than cobalt, and a content of cobalt in the compound may be higher than that of other elements. The cobalt-containing compound may have a cobalt content in the compound of 30 mol% or more.

According to an embodiment, the coating layer may include a cobalt-containing compound represented by Formula 5:

Formula 5 Liₓ₁Co_{y1}M'_{z1}O_{a1,}

wherein in Formula 5,

M' is one or more transitionone or more transition metals other than Co, and 0.5<x1, 0<y1<1, 0<z1<1, and 1<a1<3.

According to an embodiment, in Formula 5, it may be that 0.3≤y1/(y1+z1)<1. For example, in Formula 5, it may be that 0.3<y1/(y1+z1)<1, for example, 0.5≤y1/(y1+z1)<1.

According to another embodiment, the coating layer may include a cobalt-containing compound represented by Formula 6:

Formula 6 Liₓ₁Co_{y1}Ni_{z11}M2_{z12}M3_{z13}O₂

wherein in Formula 6,
M2 and M3 are each independently one or more transitionone or more transition metals selected from Mn, B, Zr, P, Ca, Al, W, Mg, V and Ti, and
0.5<x1<1.1, 0.3≤y1<1, 0<z11≤0.7, 0≤z12<1, and 0≤z13<1.

For example, in Formula 6, it may be that 0.8≤x1<1.1, 0.5≤y1<1, 0<z11<0.5, 0<z12<0.5, and 0≤z13<1.

According to an embodiment, the coating layer may be arranged to cover at least a portion of the lithium transition metal oxide. For example, the coating layer may completely cover the surface of the lithium transition metal oxide.

According to an embodiment, the coating layer may have a thickness of 200 nm or less. When the thickness of the coating layer is 200 nm or less, the coating layer has the effect of sufficiently reducing the residual lithium without acting as a resistance layer against movement of lithium.

According to an embodiment, the cobalt-containing compound may have the same crystalline structure as the lithium metal oxide. As a result, lithium ions may easily move during charge/discharge processes, and despite the presence of a coating layer, excellent rate characteristics are obtained.

For example, the cobalt-containing compound may include a layered structure. For example, the cobalt-containing compound may only have a layered structure. As a result, a stable crystal structure is maintained even in charge/discharge processes, resulting in suppression of direct contact and side reactions of the lithium transition metal oxide with the electrolyte solution.

Hereinafter, a method of preparing a positive active material according to an aspect will be described in detail.

A method of preparing a positive active material according to an embodiment includes: preparing lithium transition metal oxide particles, in which a portion of Li is substituted by Na, and Ni and Co are included; obtaining a positive active material precursor by mixing the lithium transition metal oxide particles and a Co-containing compound; and obtaining a positive active material by heat treating the positive active material precursor, wherein the positive active material includes a cobalt-containing coating layer on the surface, and a concentration gradient region in which concentration of Co is decreased in a direction from the surface to the center of the particle.

According to an embodiment, the preparing lithium transition metal oxide particles may include:
obtaining a precursor of a lithium transition metal oxide by mixing a Li-containing compound, a Na-containing compound, a W-containing compound, a Mg-containing compound, a Ti-containing compound, an M-containing compound, and an S-containing compound; and heat treating the lithium transition metal oxide precursor to obtain lithium transition metal oxide particles represented by Formula 1:

   Formula 1 Li₁₋ₓNaₓM_{1-(α+β+γ)}W_{α}Mg_{β}Ti_{γ}O₂₋ₐSₐ,
wherein in Formula 1,
M is one or more elements selected from alkali metal elements, alkaline earth metal elements, transition metal elements, post-transition metal elements, and non-metallic elements, other than W, Mg, Ti, Na, and S and
0<x≤0.01, 0<α≤0.01, 0<β≤0.005, 0<γ≤0.005, 0<a≤0.01, and 0<α+β+γ≤0.02.

For a specific description of Formula 1, refer to the description above.

The mixing includes mechanically mixing the compounds containing specific elements. The mechanical mixing may be performed as a dry process. The mechanical mixing is forming a uniform mixture by pulverizing and mixing the materials to be mixed by applying a mechanical force. The mechanical mixing may be performed by, for example, using a mixing device such as a ball mill, which uses chemically inert beads, a planetary mill, a stirred ball mill, or a vibrating mill. In this regard, in order to maximize the mixing effect, alcohols such as ethanol, and higher fatty acids such as stearic acid may be selectively added in small quantities.

The mechanical mixing may be carried out in an oxidizing atmosphere, so as to prevent the reduction of the transition metal in the transition metal source (for example, Ni compound), and to implement structural stability of the active material.

The lithium-containing compound may include, but is not limited to, lithium hydroxide, oxide, nitride, carbonate, or a combination thereof. For example, the lithium precursor may be LiOH or Li₂CO₃.

The Na-containing compound may include, but is not limited to, hydroxide, oxide, nitride, carbonate of Na, or a combination thereof. For example, the Na-containing compound may be NaOH, Na₂CO_{3,} or a combination thereof.

The W-containing compound may include, but is not limited to, hydroxide, oxide, nitride, carbonate of W, or a combination thereof. For example, the W-containing compound may be W(OH)₆, WO_{3,} or a combination thereof.

The Mg-containing compound may include, but is not limited to, hydroxide, oxide, nitride, carbonate of Mg, or a combination thereof. For example, the Mg-containing compound may be Mg(OH)₂, MgCO_{3,} or a combination thereof.

The Ti-containing compound may include, but is not limited to, hydroxide, oxide, nitride, carbonate of Ti, or a combination thereof. For example, the Ti-containing compound may be Ti(OH)₂, TiO₂, or a combination thereof.

The M-containing compound may include hydroxide, oxide, nitride, carbonate, or a combination thereof of at least one or more elements selected from alkali metal elements, alkaline earth metal elements, metalloid elements, and non-metallic elements, other than W, Mg, Ti, Na, and S, but is not limited thereto. For example, the M-containing compound may be Ni_{0.8}Co_{0.1}Mn_{0.1}(OH)₂, Ni_{0.9}Co_{0.05}Al_{0.05}(OH)₂, or Ni_{0.9}Co_{0.1}(OH)₂.

The S-containing compound may include, but is not limited to, hydroxide, oxide, nitride, carbonate of S, or a combination thereof. For example, the S-containing compound may be (NH₄)₂S.

According to an embodiment, the process of obtaining a lithium transition metal oxide precursor may further include a Co-containing compound as a material for mixing.

The Co-containing compound is a compound capable of providing cobalt, and includes hydroxide, oxide, nitride, carbonate, acetate of Co, or a combination thereof. For example, Co-containing compound may be cobalt acetate.

In the process of preparing lithium transition metal oxide particles, the heat treating may include a first heat treatment, and a second heat treatment. The first heat treatment and the second heat treatment may be performed continuously, or there may be a break after the first heat treatment. In addition, the first heat treatment and the second heat treatment may be performed in the same chamber, or may be performed in different chambers.

The heat treatment temperature in the first heat treatment may be higher than the heat treatment temperature in the second heat treatment.

The first heat treatment may be performed at a heat treatment temperature of 800 °C to 1200 °C. The heat treatment temperature may be, for example, 850 °C to 1200 °C, 860 °C to 1200 °C, 870 °C to 1200 °C, 880 °C to 1200 °C, 890 °C to 1200 °C, or 900 °C to 1200 °C, but is not limited thereto, and includes all ranges formed by selecting any two points in the above range.

The second heat treatment may be performed at a heat treatment temperature of 700 °C to 800 °C. The heat treatment temperature may be, 710 °C to 800 °C, 720 °C to 800 °C, 730 °C to 800 °C, 740 °C to 800 °C, 750 °C to 800 °C, or 700 °C to 780 °C, 700 °C to 760 °C, 700 °C to 750 °C, or 700 °C to 730 °C, but is not limited thereto, and includes all ranges formed by selecting any two points in the above range.

According to an embodiment, the heat treatment time in the first heat treatment may be shorter than the heat treatment time in the second heat treatment.

For example, in the first heat treatment, the heat treatment time may be 3 hours to 5 hours, 4 hours to 5 hours, or 3 hours to 4 hours, but is not limited thereto, and includes all ranges formed by selecting any two points in the above range.

For example, in the second heat treatment, the heat treatment time may be 10 hours to 20 hours, or 10 hours to 15 hours, but is not limited thereto, and includes all ranges formed by selecting any two points in the above range.

The first heat treatment may include heat treating for 3 hours to 5 hours at a heat treatment temperature of 800 °C to 1200 °C.

The second heat treatment may include heat treating for 10 hours to 20 hours at a heat treatment temperature of 700 °C to 800 °C.

In the first heat treatment, lithium transition metal oxide forms a positive active material of a layered structure, and growth of the particles is induced, so that a single crystal is formed. In the first heat treatment, it is thought that each of the first particles in forms of secondary particles in the lithium transition metal oxide is rapidly grown, and as the stress between the particles is not tolerated, the inside of the first particles is exposed, and the first particles are fused, so that a single crystal positive active material for a secondary battery is formed. The second heat treatment performs heat treatment at a temperature lower than in the first heat treatment for a long time, so as to increase crystallinity of the layered structure generated in the first heat treatment. Through the first and second heat treatments, a single-phase, single crystal, single particle high-nickel-based positive active material may be obtained.

According to an embodiment, the calcining may be performed at a temperature of 500 °C to 900 °C. For example, the calcining may be performed at a temperature of 600 °C to 900 °C. According to an embodiment, the calcining may be performed for 1 to 6 hours. According to an embodiment, the calcining may be performed for 2 to 4 hours.

According to an embodiment, the calcining may be performed at a temperature of 500 °C to 900 °C for 1 to 6 hours. By calcining the positive active material precursor at the calcining temperature and time, a concentration gradient region in which Co has a concentration gradient is formed, and a positive active material having a cobalt-containing coating layer is formed on the surface.

In the calcining process to form the cobalt-containing coating layer, a transition metal element other than Co included in the lithium transition metal oxide particles may be spread to form composite particles with Co. For the composite particles, refer to the description of Formulae 5 and 6 described above.

According to an embodiment, the lithium transition metal oxide prepared by the manufacturing method is a single crystal and a single particle, and the single crystal may have a layered structure. Furthermore, the average particle diameter of the lithium transition metal oxide may be 0.1 µm to 20 µm.

In addition, in the lithium transition metal oxide prepared by the method of manufacturing a positive active material, M is substituted by W, Mg, and Ti, O is substituted by S, and Li is substituted by Na, so that oxidation of existing Ni²⁺ is suppressed, and reduction of unstable Ni³⁺ ions to Ni²⁺ ions is induced, and a lithium transition metal oxide having a structural stability and high density is obtained. Furthermore, the reduced Ni²⁺ ions and Li⁺ ions have similar ion radii, so that Li/Ni disordering is promoted, and Ni ions fill the empty lattice when Li is desorbed, and a structural stability of the crystal is promoted.

Moreover, as a Co-concentration gradient region and a Co-containing coating layer on the surface of the positive active material are further included, capacity and lifespan characteristics are improved, compared to the existing case in which only the transition metals are additionally substituted.

According to another aspect, a positive electrode including the aforementioned positive active material is provided.

According to still another aspect, a lithium secondary battery including the positive electrode; negative electrode; and electrolyte, is provided.

The positive electrode and a lithium secondary battery including the same may be prepared in the following manner.

First, a positive electrode is prepared.

For example, a positive active material composition is prepared wherein the above-described positive active material, a conductive material, a binder, and a solvent are mixed. The positive active material composition is directly coated on the metal current collector to prepare a positive electrode plate. Alternatively, the positive active material composition may be casted on a separate support, and then a film peeled off from the support may be laminated on the metal current collector to prepare a positive electrode plate. The positive electrode is not limited to a form listed above, and may be in a form other than the above forms.

For the conductive material, graphite such as natural graphite or artificial graphite; carbon black; conductive tubes such as carbon nanotubes; conductive whisker such as fluorocarbon, zinc oxide, potassium titanate; conductive metal oxides such as titanium oxide; may be used, but it is not limited thereto, and all that may be used as a conductive material in the related art may be used.

For the binder, vinylidene fluoride/hexafluoropropylene copolymer, polyvinylidene fluoride (PVDF), polyacrylonitrile, polymethyl methacrylate, a polytetrafluoroethylene, a mixture thereof, a metal salt, or a styrene butadiene rubber-based polymers may be used, but it is not limited thereto, all that may be used as a binder in the related art may be used. For other examples of a binder, lithium salts, sodium salts, or calcium salts of the above-described polymers may be used.

For the solvent, N-methylpyrrolidone, acetone or water may be used, but it is not limited thereto, all that may be used in the related art may be used.

The content of the positive active material, conductive material, binder, and solvent is a level typically used in a lithium battery. Depending on the use and configuration of the lithium battery, one or more of the conductive material, binder, and solvent may be omitted.

Next, a negative electrode is prepared.

For example, a negative active material composition is prepared by mixing a negative active material, a conductive material, a binder, and a solvent. The negative active material is directly coated on a metal current collector which has a thickness of 3 µm to 500 µm, and is dried to prepare a negative electrode plate. Alternatively, the negative active material composition may be casted on a separate support, and then a film peeled off from the support may be laminated on the metal current collector to prepare a negative electrode plate.

The negative electrode current collector is not particularly limited as long as the negative electrode current collector does not cause a chemical change in the battery and has conductivity, and for example, copper, nickel, and copper treated with carbon on the surface may be used.

For the negative active material, any that may be used as a negative active material in the related art may be used. For example, the negative active material may include one or more selected from lithium metals, metals alloyable with lithium, transition metal oxides, non-transition metal oxides, and carbon-based materials.

For example, the metals alloyable with lithium may be Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

For example, the transition metal oxide may be lithium titanium oxide, vanadium oxide, lithium vanadium oxide, and the like.

For example, the non-transition metal oxide may be SnO₂, SiOₓ (0< x <2), and the like.

The carbon-based material may be crystalline carbon, amorphous carbon or a mixture thereof. The crystalline carbon may be amorphous, plate-like, flake-like, spherical or fibrous graphite such as natural graphite or artificial graphite, and the amorphous carbon may be soft carbon (carbon calcined at a low-temperature) or hard carbon, a mesophase pitch carbide, a calcined coke, and the like.

In the negative active material composition, for a conductive material, binder, and solvent, the same may be used as in the case of the positive active material composition.

The content of the negative active material, conductive material, binder, and solvent is a level typically used in a lithium battery. Depending on the use and configuration of the lithium battery, one or more of the conductive material, binder, and solvent may be omitted.

Next, a separator to be inserted between the positive electrode and the negative electrode is prepared.

For the separator, all that are used in a lithium battery in the art may be used. A separator having a low resistance to the ionic movement of the electrolyte, and having an excellent impregnation ability of electrolyte solution may be used. The separator may be a single film or a multi-layer film, for example, is selected from glass fiber, polyester, teflon, polyethylene, polypropylene, polyvinylidene fluoride, polytetrafluoroethylene (PTFE) or combination thereof, and may be in a form of a nonwoven fabric or a woven fabric. In addition, a mixed multilayer film such as a polyethylene/polypropylene 2-layer separator, polyethylene/polypropylene/polyethylene 3-layer separator, polypropylene/polyethylene/ polypropylene 3-layer separator may be used. For example, a winding separator such as polyethylene, polypropylene, and the like may be used in a lithium ion cell, and a separator having an excellent impregnation ability of a electrolyte solution may be used in a lithium ion polymer cell. For example, the separator may be prepared according to the following method.

A separator composition is prepared by mixing a polymer resin, a filler and a solvent. The separator composition is directly coated on the electrode and dried to form a separator. Alternatively, after the separator composition is casted and dried on a support, a separator film may be peeled off from the support and laminated on the electrode to form a separator.

The polymer resin used in the production of the separator is not particularly limited, and all materials used as a binder of the electrode plate may be used. For example, vinylidene fluoride/hexafluoropropylene copolymer, polyvinylidene fluoride (PVDF), polyacrylonitrile, polymethyl methacrylate, or a mixture thereof, may be used.

Next, an electrolyte is prepared.

For example, the electrolyte may be an organic electrolyte solution. In addition, the electrolyte may be a solid. For example, the electrolyte may be boron oxide, lithium oxynitride, and the like, but is not limited thereto, and all that may be used as a solid electrolyte in the related art may be used. The solid electrolyte may be formed on the negative electrode by using a method such as sputtering.

For example, the organic electrolyte solution may be prepared by dissolving lithium salt in an organic solvent.

For the organic solvent, all that may be used as an organic solvent in the art may be used. For example, the organic solvent may be cyclic carbonate such as propylene carbonate, ethylene carbonate, fluoroethylene carbonate, butylene carbonate, vinylene carbonate, etc.; chain-like carbonate such as dimethylcarbonate, diethyl carbonate, methyl ethyl carbonate, methylpropylcarbonate, ethyl propylcarbonate, methyl isopropylcarbonate, dipropylcarbonate, dibutylcarbonate, etc.; ethers such as methyl acetate, ethyl acetate, propyl acetate, methyl propionate, ethyl propionate, γ-butyrolactone, etc.; nitriles such as acetonitrile; amides such as dimethylformamide, etc. They can be used alone or in combination of many. For example, a solvent in which cyclic carbonate and chain-like carbonate are mixed may be used.

In addition, a gel polymer electrolyte in which a polymer electrolyte such as polyethylene oxide or polyacrylonitrile is impregnated with an electrolyte solution, or an inorganic solid electrolyte such as LiI, Li₃N, LiₓGe_{y}P_{z}S_{α}, and LiₓGe_{y}P_{z}S_{α}X_{δ} (X=F, Cl, Br) may be used.

For the lithium salts, all that may be used as lithium salts in the art may be used. For example, the lithium salts may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(x and y are natural numbers), LiCl, Lil, or a combination thereof.

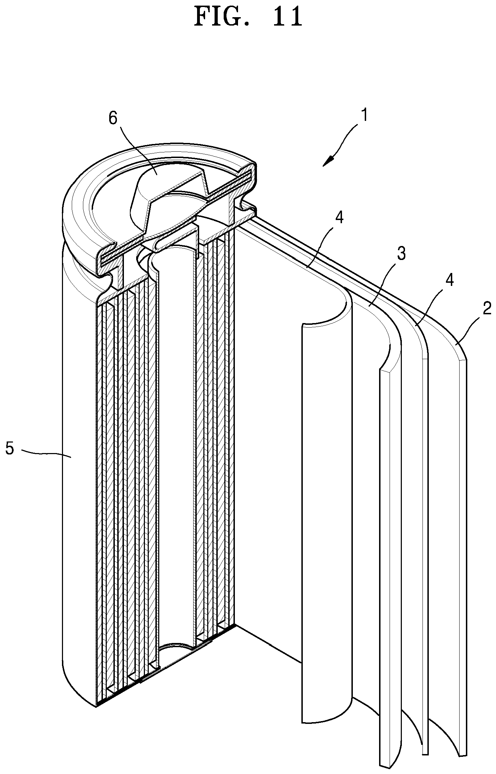

As shown in FIG. 11, the lithium battery 1 includes a positive electrode 3, a negative electrode 2, and a separator 4. The above-described positive electrode 3, negative electrode 2, and separator 4 are winded or folded to be accommodated in the battery case 5. Next, an organic electrolyte solution is injected into the battery case 5, the battery case 5 is sealed with a cap assembly 6, and a lithium battery is completed. The battery case 5 may be a cylindrical type, a square type, a pouch type, a coin type, a thin film type, etc. For example, the lithium battery 1 may be a thin film type battery. The lithium battery 1 may be a lithium ion battery.

A separator may be arranged between the positive electrode and the negative electrode to form a battery structure. When the battery structure is laminated in a bi-cellular structure, impregnated with an organic electrolyte, and accommodated in a pouch and sealed, a lithium ion polymer battery is completed.

In addition, a plurality of the battery structures may be laminated to form a battery pack, and such a battery pack may be used for all devices that require high capacity and high power. For example, the battery pack may be used in a laptop, smartphone, electric vehicle, and the like.

Furthermore, since the lithium battery is excellent in lifespan characteristics and high rate characteristics, the lithium battery may be used in electrical vehicles (EV). For example, the lithium battery may be used in a hybrid vehicle such as plug-in hybrid electric vehicle (PHEV). Furthermore, the lithium battery may be used in a field in which a large amount of power storage is required. For example, the lithium battery may be used in an electric bicycle, a power tool, a power storage system, and the like.

The present disclosure is described in more detail with reference to the following manufacturing examples, examples, and comparative examples. However, the examples are intended to illustrate the present disclosure, and the scope of the present disclosure is not limited by the examples.

### (Preparation of positive active material)

### Example 1

100 g of Ni_{0.8}Co_{0.1}Mn_{0.1}(OH)₂, 41.8 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 1,000 °C for 4 hours and at 700 °C for 10 hours to obtain a lithium transition metal oxide particle.

Subsequently, 2 g of cobalt acetate and 100 g of the lithium transition metal oxide particles were mechanically mixed for 30 minutes, and the mixed powder was calcined at 800 °C for 3 hours to obtain a positive active material. The specific composition of the obtained positive active material may be found in Table 1.

### Example 2

100 g of Ni_{0.90}Co_{0.05}Al_{0.05}(OH)_{2,} 42.4 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 970 °C for 4 hours and at 700 °C for 10 hours to obtain a lithium transition metal oxide particle.

Subsequently, 2 g of cobalt acetate and 100 g of the lithium transition metal oxide particles were mechanically mixed for 30 minutes, and the mixed powder was calcined at 800 °C for 3 hours to obtain a positive active material. The specific composition of the obtained positive active material may be found in Table 1.

### Example 3

100 g of Ni_{0.9}Co_{0.1}(OH)_{2,} 42.0 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 970 °C for 4 hours and at 700 °C for 10 hours to obtain a lithium transition metal oxide particle.

Subsequently, 2 g of cobalt acetate and 100 g of the lithium transition metal oxide particles were mechanically mixed for 30 minutes, and the mixed powder was calcined at 800 °C for 3 hours to obtain a positive active material. The specific composition of the obtained positive active material may be found in Table 1.

### Comparative Example 1

100 g of Ni_{0.8}Co_{0.1}Mn_{0.1}(OH)₂, 41.8 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 1,000 °C for 4 hours and at 700 °C for 10 hours to obtain a positive active material. The specific composition of the obtained positive active material may be found in Table 1.

### Comparative Example 2

100 g of Ni_{0.8}Co_{0.1}Mn_{0.1}(OH)_{2,} 41.8 g of Li₂CO₃, 0.27 g of MgCO₃, and 0.24 g of TiO₂ were mechanically mixed for about 15 minutes. The mixed powder was heat treated at 1,000 °C for 4 hours and at 700 °C for 10 hours to obtain a positive active material. The specific composition of the obtained positive active material may be found in Table 1.

### Comparative Example 3

100 g of Ni_{0.8}Co_{0.1}Mn_{0.1}(OH)_{2,} 41.8 g of Li₂CO₃, 0.27 g of MgCO₃, and 0.45 g NaOH were mechanically mixed for about 15 minutes. The mixed powder was heat treated at 1,000 °C for 4 hours and at 700 °C for 10 hours to obtain a positive active material. The specific composition of the obtained positive active material may be found in Table 1.

### Comparative Example 4

100 g of Ni_{0.8}Co_{0.1}Mn_{0.1}(OH)_{2,} 41.8 g of Li₂CO₃, 3.0 g of WO₃, and 0.27 g of MgCO₃ were mechanically mixed for about 15 minutes. The mixed powder was heat treated at 1,000 °C for 4 hours and at 700 °C for 10 hours to obtain a positive active material. The specific composition of the obtained positive active material may be found in Table 1.

### Comparative Example 5

100 g of Ni_{0.8}Co_{0.1}Mn_{0.1}(OH)_{2,} 41.8 g of Li₂CO₃ and 0.75 g of (NH₄)₂S were mechanically mixed for about 15 minutes. The mixed powder was heat treated at 1,000 °C for 4 hours and at 700 °C for 10 hours to obtain a positive active material. The specific composition of the obtained positive active material may be found in Table 1.

### Comparative Example 6

100 g of Ni_{0.8}Co_{0.1}Mn_{0.1}(OH)₂ and 41.8 g of Li₂CO₃ were mechanically mixed for about 15 minutes. The mixed powder was heat treated at 1,000 °C for 4 hours and at 700 °C for 10 hours to obtain a lithium transition metal oxide particle.

Subsequently, 2 g of cobalt acetate and the lithium transition metal oxide particles were mechanically mixed and calcined at 800 °C for 3 hours to obtain a positive active material. The specific composition of the obtained positive active material may be found in Table 1.

### Comparative Example 7

100 g of Ni_{0.8}Co_{0.1}Mn_{0.1}(OH)_{2,} 41.8 g of Li₂CO₃, 3.0 g of WO₃, and 0.27 g of MgCO₃ were mechanically mixed for about 15 minutes. The mixed powder was heat treated at 1,000 °C for 4 hours and at 700 °C for 10 hours to obtain a lithium transition metal oxide particle.

Subsequently, 2 g of cobalt acetate and the lithium transition metal oxide particles were mechanically mixed and calcined at 800 °C for 3 hours to obtain a positive active material. The specific composition of the obtained positive active material may be found in Table 1.

### Comparative Example 8

100 g of Ni_{0.8}Co_{0.1}Mn_{0.1}(OH)₂, 41.8 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 1,000 °C for 4 hours and at 700 °C for 10 hours to obtain a lithium transition metal oxide particle.

Subsequently, 2 g of cobalt acetate was dissolved in ethanol, and then the lithium transition metal oxide particles were added and stirred for 30 minutes. The stirred solution was again stirred at 80 °C for 1 hour to evaporate the ethanol solvent, and the mixed powder was calcined at 800 °C to obtain a positive active material. The specific composition of the obtained positive active material may be found in Table 1.

### Comparative Example 9

100 g of Ni_{0.9}Co_{0.05}Al_{0.05}(OH)₂, 42.4 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 970 °C for 4 hours and at 700 °C for 10 hours to obtain a positive active material. The specific composition of the obtained positive active material may be found in Table 1.

### Comparative Example 10

100 g of Ni_{0.9}Co_{0.1}(OH)_{2,} 42.0 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was heat treated at 970 °C for 4 hours and at 700 °C for 10 hours to obtain a lithium transition metal oxide particle. The specific composition of the obtained positive active material may be found in Table 1.

### (Preparation of half-cells)

### Example 4

The positive active material obtained in Example 1: conductive material: binder were mixed at a weight ratio of 94: 3: 3 to prepare slurry. Here, carbon black was used as the conductive material, polyvinylidene fluoride (PVDF) dissolved in N-methyl-2-pyrrolidone solvent was used as a binder.

The slurry was uniformly applied to the Al current collector, dried at 110 °C for 2 hours to prepare a positive electrode. The loading level on the electrode plate was 11.0 mg/cm², and the electrode density was 3.6 g/cc.

The prepared positive electrode was used as a working electrode, and the lithium foil was used as the count electrode, and CR2032 half-cell was prepared according to a process known in the art by using a liquid electrolyte solution, in which lithium salt was added to a mixed solvent where EC/EMC/DEC were mixed at a volume ratio of 3/4/3 so that LiPF₆ reaches a density of 1.3 M.

### Examples 5 to 6

Half-cells were prepared in the same manner as in Example 4, except that the positive active materials obtained in Examples 2 to 3 were used instead of the positive active material obtained in Example 1.

### Comparative Examples 11 to 20

Half-cells were prepared in the same manner as in Example 4, except that the positive active materials obtained in Comparative Examples 1 to 10 were used instead of the positive active material obtained in Example 1.

**[Table 1]**

| Positive active material/half-cell | Positive active material composition | Concentratio n gradient region |
|---|---|---|
| Example 1/Example 4 | Li_{0.99}Na_{0.01}W_{0.01}Mg_{0.003}Ti_{0.003}Ni_{0.781}Co_{0.119}Mn_{0.084}O_{1.9 99}S_{0.001}-Liₓ₁Co_{y1}M'_{z1}Oₐ₁ | O |
| Example 2/Example 5 | Li_{0.99}Na_{0.01}W_{0.01}Mg_{0.003}Ti_{0.003}Ni_{0.876}Co_{0.061}Al_{0.047}O_{1.999} S_{0.001}-Liₓ₁Co_{y1}M'_{z1}Oₐ₁ | O |
| Example 3/Example 6 | Li_{0.99}Na_{0.01}W_{0.01}Mg_{0.003}Ti_{0.003}Ni_{0.87}Co_{0.114}O_{1.999}S_{0.001}-Liₓ₁Co_{y1}M'_{z1}Oₐ₁ | O |
| Comparative Example 1/Comparative Example 11 | Li_{0.99}Na_{0.01}W_{0.01}Mg_{0.003}Ti_{0.003}Ni_{0.791}Co_{0.103}Mn_{0.o9}O_{1.99 9}S_{0.001} | X |
| Comparative Example 2/Comparative Example 12 | LiMg_{0.003}Ti_{0.003}Ni_{0.797}Co_{0.098}Mn_{0.099}O₂ | X |
| Comparative Example 3/Comparative Example 13 | Li_{0.99}Na_{0.01}Mg_{0.003}Ni_{0.798}Co_{0.099}Mn_{0.1}O₂ | X |
| Comparative Example 4/Comparative Example 14 | LiW_{0.01}Mg_{0.003}Ni_{0.790}Co_{0.098}Mn_{0.099}O₂ | X |
| Comparative Example 5/Comparative Example 15 | LiNi_{0.8}Co_{0.1}Mn_{0.1}O_{1.999}S_{0.001} | X |
| Comparative Example 6/Comparative Example 16 | LiNi_{0.8}Co_{0.1}Mn_{0.1}O₂-Liₓ₁Co_{y1}M'_{z1}Oₐ₁ | O |
| Comparative Example 7/Comparative Example 17 | LiW_{0.01}Mg_{0.003}Ni_{0.790}Co_{0.098}Mn_{0.099}O₂-Liₓ₁Co_{y1}M'_{z1}Oₐ₁ | O |
| Comparative Example 8/Comparative Example 18 | Li_{0.99}Na_{0.01}W_{0.o1}Mg_{0.003}Ti_{0.003}Ni_{0.781}Co_{0.119}Mn_{0.084}O_{1.9 99}S_{0.001} | O |
| Comparative Example 9/Comparative Example 19 | Li_{0.99}Na_{0.01}W_{0.01}Mg_{0.003}Ti_{0.003}Ni_{0.879}Co_{0.047}Al_{0.049}O_{1.999} S_{0.001} | X |
| Comparative Example 10/Comparative Example 20 | Li_{0.99}Na_{0.01}W_{0.01}Mg_{0.003}Ti_{0.003}Ni_{0.886}Co_{0.098}O_{1.999}S_{0.001} | X |

### Evaluation Example 1: Evaluation of composition of positive active material

Inductively coupled plasma (ICP) analysis was carried out on positive active materials synthesized in Examples 1 and Comparative Example 1 by using a 700-ES (Varian) equipment, and the results are shown in Table 2 below.

Referring to Table 2, as a result of ICP analysis of Comparative Example 1 and Example 1, an introduction of a Co-concentration gradient region and a Co-containing coating layer on the surface of a monocrystalline Ni-based positive active material increases Co ratio by 1.6 mol% in the positive active material because Co substitutes other transition metals in the positive active material, and a number of moles of other transition metals is decreased. In addition, when performing an ICP analysis, the stoichiometric value of oxygen included in the material is difficult to analyze even when the analysis is performed in a vacuum due to the inflow of trace amount of oxygen and carbon dioxide in the air.

**[Table 2]**

| (mol%) | Li | Na | Ni | Co | Mn | W | Mg | Ti | S |
|---|---|---|---|---|---|---|---|---|---|
| Comparative Example 1 | 99 | 1 | 79.1 | 10.3 | 9.0 | 1 | 0.3 | 0.3 | 0.1 |
| Example 1 | 99 | 1 | 78.2 | 11.9 | 8.3 | 1 | 0.3 | 0.3 | 0.1 |

### Evaluation Example 2: Evaluation of particle size of positive active material

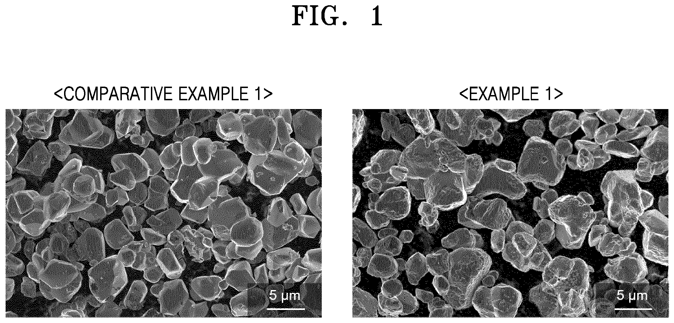

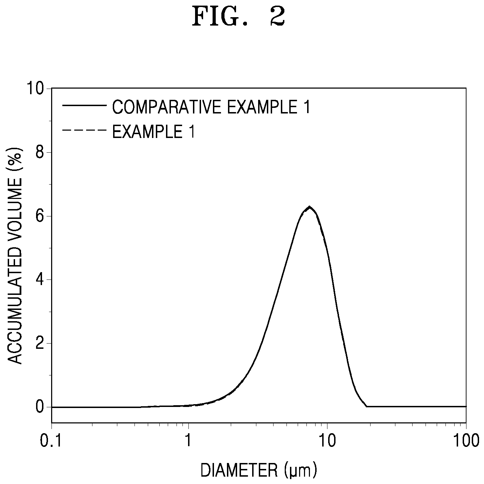

Scanning electron microscope (SEM) images of positive active materials synthesized in Example 1 and Comparative Example 1 were obtained by using FEI's Verios 460 device and were shown in FIG. 1. Particle sizes were measured by using Scinco's Cilas 1090 device and were shown in Table 3 and FIG. 2.

Referring to Table 3 and FIGS. 1 to 2, although a Co concentration gradient region and a Co-containing coating layer were introduced into the single particle type positive active material of Example 1, a significant change in the particle diameter was not observed compared to the single particle type positive active material of Comparative Example 1, and it was confirmed that the Co-containing compound was present as particles of a size of hundreds of nanometers on the surface of the positive active material of Example 1.

**[Table 3]**

| | D₁₀(*µ*m) | D₅₀(*µ*M) | D₉₀(*µ*m) |
|---|---|---|---|
| Comparative Example 1 | 3.2 | 6.4 | 10.8 |
| Example 1 | 3.3 | 6.5 | 10.9 |

### Evaluation Example 3: Evaluation of concentration gradient region of positive active material

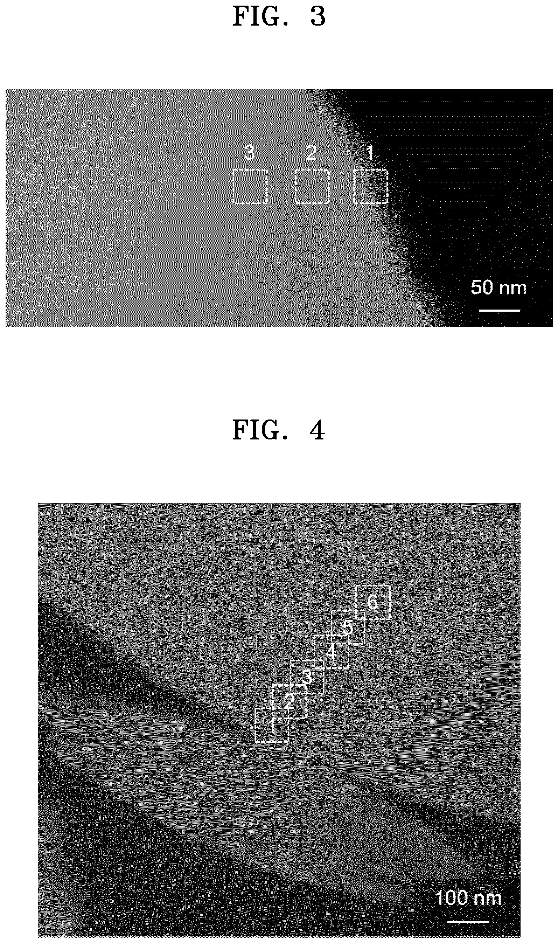

For the positive active materials obtained in Example 1 and Comparative Example 1, images were taken by using a high resolution transmission electron microscopy (HR-TEM), and an energy dispersive X-ray spectroscopy (EDX) analysis was performed. The results are shown in Tables 4 and 5, and FIGS. 3 and 4.

**[Table 4]**

| Location | Ni(mol%) | Co(mol%) | Mn(mol%) |
|---|---|---|---|
| 1 | 79.1 | 9.9 | 10.0 |
| 2 | 79.5 | 10.8 | 9.7 |
| 3 | 79.7 | 10.3 | 9.8 |

**[Table 5]**

| Location | Ni(mol%) | Co(mol%) | Mn(mol%) |
|---|---|---|---|
| 1 | 66.3 | 23.7 | 10.0 |
| 2 | 72.0 | 18.3 | 9.7 |
| 3 | 74.6 | 15.6 | 9.8 |
| 4 | 76.4 | 13.5 | 10.1 |
| 5 | 78.4 | 11.9 | 9.7 |
| 6 | 80.3 | 9.8 | 9.9 |

Referring to Table 4 and FIG. 3, it may be seen that a concentration of the transition metal in the positive active material, for example Ni, Co, and Mn, is maintained substantially constantly, to the direction of the surface and the center.

Referring to Table 5 and FIG. 4, a tendency was found that a concentration of Co decreased in the direction from the surface of the positive active material to the center, and a concentration of Ni increased on the contrary. It was also found that the Co concentration gradient layer is about 500 nm. Without being bound by a particular theory, cobalt ions in the transition metal contribute to structural stability of a positive active material having a layered structure, compared to nickel ions, and thus it is thought that, when relatively stable cobalt is included on the surface of the positive active material in an excessive amount, structural stability of the positive active material during charge/discharge processes is improved, and long-life characteristics are enhanced.

### Evaluation Example 4: Evaluation of coating layer of positive active material

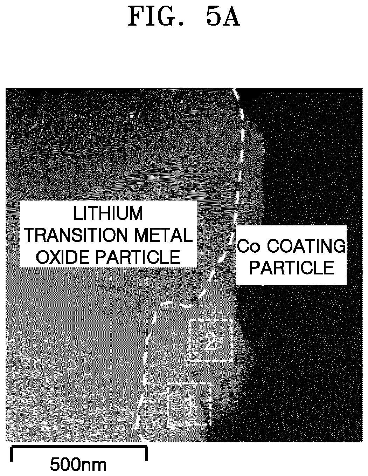

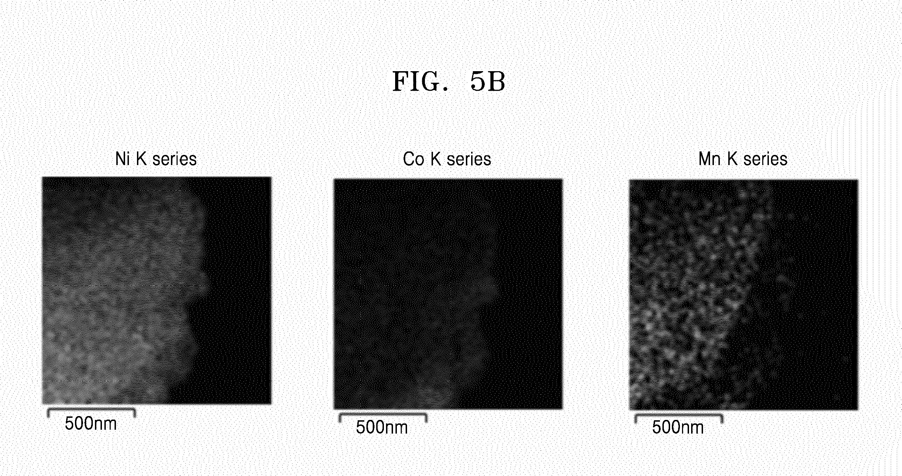

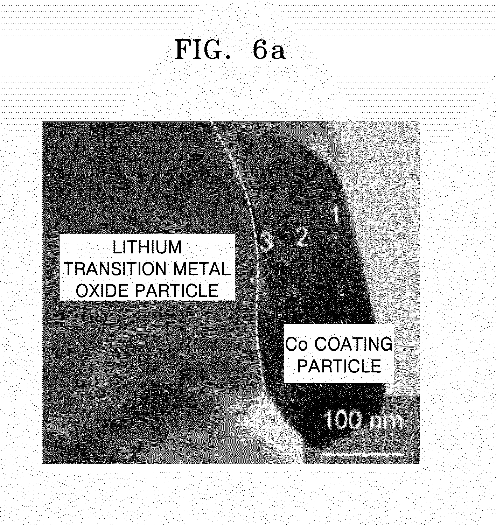

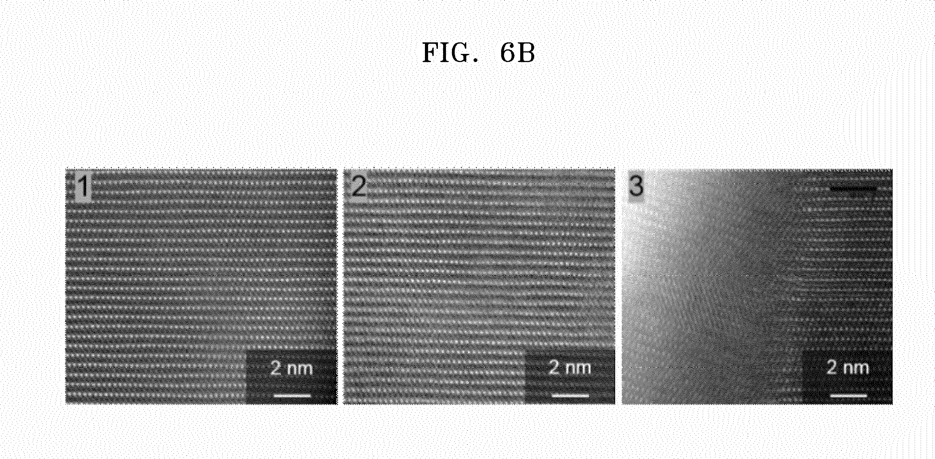

For the positive active material obtained in Example 1, photographs were taken by using a high resolution transmission electron microscopy (HR-TEM), and an energy dispersive X-ray spectroscopy (EDX) analysis was performed. The results are shown in Table 6 and FIGS. 5A, 5B, 6A, and 6B.

**[Table 6]**

| Location | Ni (mol%) | Co (mol%) | Mn (mol%) |
|---|---|---|---|
| 1 | 61.1 | 31.4 | 7.5 |
| 2 | 61.2 | 30.7 | 8.1 |

Referring to Table 6 and FIGS. 5A and 5B, as a result of a particle surface EDX analysis of Example 1, about 200 nm or less cobalt-containing coating layer was found on the surface of the lithium transition metal oxide particle. In addition, as a result of analyzing the cobalt-containing compound included in the coating layer, it was found that cobalt was included as a main element having a content of about 30 mol%.

Furthermore, referring to FIGS. 6A and 6B, crystalline structures of a lithium transition metal oxide particle and a cobalt-containing coating layer in the positive active material of Example 1 were found to have a layered structure. As the lithium transition metal oxide particles and the coating layer surrounding the same have the same crystalline structure, lithium ions may easily move, and despite the presence of a coating layer, excellent rate characteristics are retained.

In addition, due to structural stability of a layered structure, the coating layer has a function of a protective film protecting the lithium transition metal oxide particles from the electrolyte solution, and as a result, lifespan stability is improved when electrochemically evaluated.

### Evaluation Example 5: Evaluation of lifespan at room temperature

Half-cells prepared in Examples 4 to 6 and Comparative Examples 11 to 20 were rested for 10 hours, charged at a constant current (CC) mode at 0.1 C so the voltage reached 4.3 V, and then charged at a constant voltage (CV) mode so the current reached 0.05 C. Next, the half-cells were discharged at CC mode at 0.1 C so the voltage reached 3.0 V, and the formation process was completed.

Next, the half-cells were charged at CC mode at 0.5 C so the voltage reached 4.3 V at room temperature (25 °C), and then were charged at CV mode so the current reached 0.05 C. Next, the half-cells were discharged at CC mode at 1 C so the voltage reached 3.0 V, and the process was repeated 100 times.

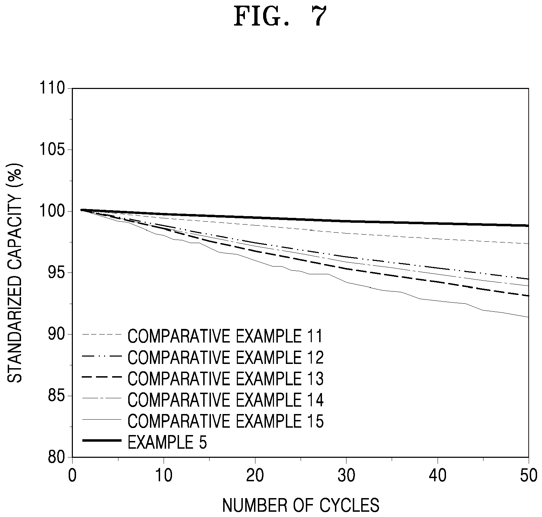

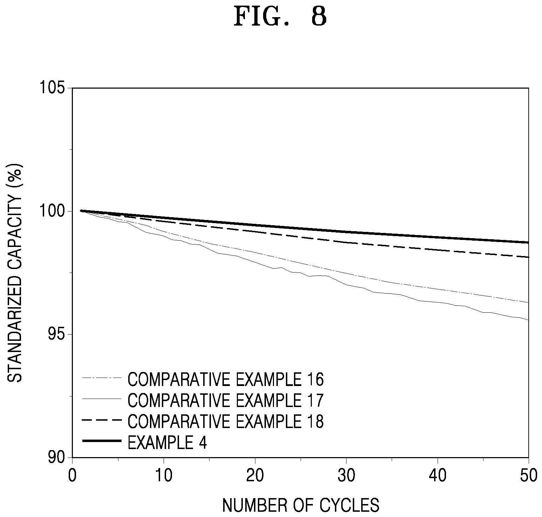

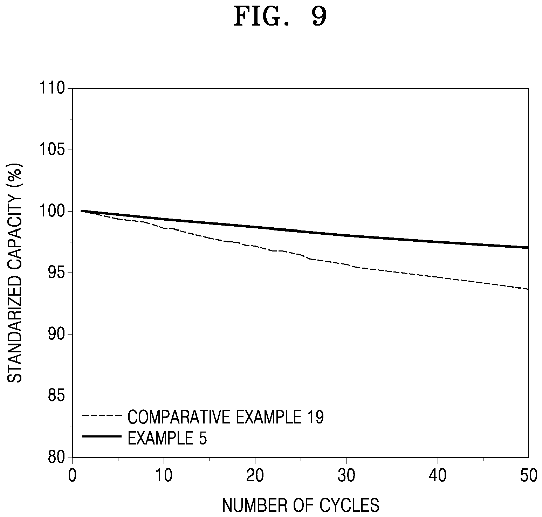

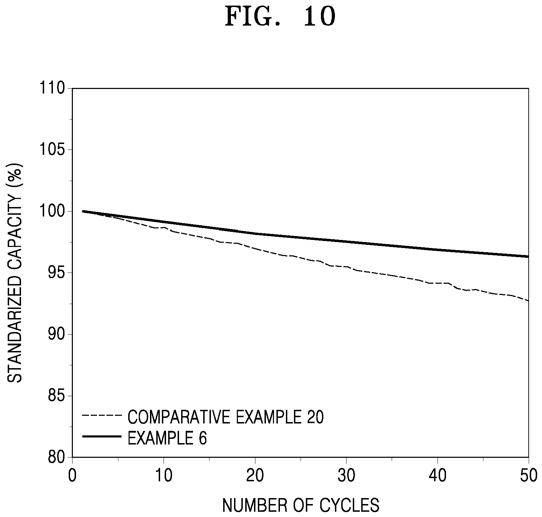

Capacity retention rate was calculated with respect to the initial capacity after charging and discharging for 50 times, and the results are shown in Table 7 below. Furthermore, graphs showing capacity retention rates according to the cycle are shown in FIGS. 7 to 10.

**[Table 7]**

| Positive active material/half-cell | Positive active material composition | Concent ration gradient region | Lifespa n retentio n rate after 50 cycles (%) |
|---|---|---|---|
| Example 1/Example 4 | Li_{0.99}Na_{0.01}W_{0.01}Mg_{0.003}Ti_{0.003}Ni_{0.781}Co_{0.119}Mn _{0.084}O_{1.999}S_{0.001}-Liₓ₁Co_{y1}M1_{z1}Oₐ₁ | O | 99.0 |
| Example 2/Example 5 | Li_{0.99}Na_{0.01}W_{0.01}Mg_{0.003}Ti_{0.003}Ni_{0.876}Co_{0.061}Al_{0. 047}O_{1.999}S_{0.001}-Liₓ₁Co_{y1}M1_{z1}Oₐ₁ | O | 97.1 |
| Example 3/Example 6 | Li_{0.99}Na_{0.01}W_{0.01}Mg_{0.003}Ti_{0.003}Ni_{0.87}Co_{0.114}O_{1.99 9}S_{0.001}-Liₓ₁Co_{y1}M1_{z1}Oₐ₁ | O | 96.3 |
| Comparative Example 1/Comparative Example 11 | Li_{0.99}Na_{0.01}W_{0.01}Mg_{0.003}Ti_{0.003}Ni_{0.791}Co_{0.103}Mn _{0.09}O_{1.999}S_{0.001} | X | 97.3 |
| Comparative Example 2/Comparative Example 12 | LiMg_{0.003}Ti_{0.003}Ni_{0.797}Co_{0.098}Mn_{0.099}O₂ | X | 94.5 |
| Comparative Example 3/Comparative Example 13 | Li_{0.99}Na_{0.01}Mg_{0.003}Ni_{0.798}Co_{0.099}Mn_{0.102} | X | 93.1 |
| Comparative Example 4/Comparative Example 14 | LiW_{0.01}Mg_{0.003}Ni_{0.790}Co_{0.098}Mn_{0.099}O₂ | X | 93.8 |
| Comparative Example 5/Comparative Example 15 | LiNi_{0.8}Co_{0.1}Mn_{0.1}O_{1.999}S_{0.001} | X | 91.3 |
| Comparative Example 6/Comparative Example 16 | LiNi_{0.8}Co_{0.1}Mn_{0.1}O₂-Liₓ₁Co_{y1}M1_{z1}Oₐ₁ | O | 96.3 |
| Comparative Example 7/Comparative Example 17 | LiW_{0.01}Mg_{0.003}Ni_{0.790}Co_{0.098}Mn_{0.099}O₂-Liₓ₁Co_{y1}M1_{z1}Oₐ₁ | O | 95.6 |
| Comparative Example 8/Comparative Example 18 | Li_{0.99}Na_{0.01}W_{0.01}Mg_{0.003}Ti_{0.003}Ni_{0.781}Co_{0.119}Mn _{0.084}O_{1.999}S_{0.001} | O | 98.1 |
| Comparative Example 9/Comparative Example 19 | Li_{0.99}Na_{0.01}W_{0.01}Mg_{0.003}Ti_{0.003}Ni_{0.879}Co_{0.047}Al_{0. 049}O_{1.999}S_{0.001} | X | 93.2 |
| Comparative Example 10/Comparative Example 20 | Li_{0.99}Na_{0.01}W_{0.01}Mg_{0.003}Ti_{0.003}Ni_{0.886}Co_{0.098}O_{1.9 99}S_{0.001} | X | 92.7 |

Referring to Table 7 and FIG. 7, according to lifespan evaluation results of Example 4 and Comparative Example 11 at room temperature, in a case in which a concentration gradient region and a cobalt-containing coating layer are included (Example 4), compared to a case when a coating layer and a concentration gradient region are not included, the lifespan retention rate after 50 cycles was shown to be improved by about 2 % . It may be because a cobalt-containing coating layer having a layered structure not only improves structural stability, but also prevents a direct contact of the electrolyte solution and a lithium transition metal oxide particle. Furthermore, the half-cell of Example 4 showed a lifespan retention rate after 50 cycles improved by about 8 % at the most, compared to half cells of Comparative Examples 11 to 15 in which a positive active material is applied wherein in the positive active material, a concentration gradient region is not included, and one or more of elements selected from Na, W, Mg, Ti, ad S are not introduced. Furthermore, the half-cell of Example 4 showed a lifespan retention rate after 50 cycles improved by about 4 % at the most, compared to half cells of Comparative Examples 16 to 17 in which a positive active material is applied wherein in the positive active material, a concentration gradient region and a cobalt-containing coating layer are included, but one or more of elements selected from Na, W, Mg, Ti, ad S are not introduced, in addition, the half-cell of Example 4 showed a lifespan retention rate after 50 cycles improved by about 1 % , compared to a half cell of Comparative Example 18 in which a positive active material is applied wherein in the positive active material, a concentration gradient region is included and a cobalt-containing coating layer is not included.

Such data confirmed that the best lifespan characteristics were obtained when Na, W, Mg, Ti and S elements, a concentration gradient region, and a coating layer including a cobalt-containing compound were applied simultaneously.

In addition, it was confirmed that an introduction of a concentration gradient region and a coating layer including a cobalt-containing compound improves the lifespan characteristics by about 4 % in cases of nickel-cobalt-aluminum (NCA)-based positive active material and nickel-cobalt (NC)-based positive active material, in addition to the case of nickel-cobalt-manganese (NCM )-based positive active material.

So far, preferred embodiments according to the present disclosure have been described with reference to the drawings and examples, but they are merely given as examples, and those with an average knowledge in the art will understand that various modifications and equivalent other embodiments are possible. Accordingly, the scope of the present disclosure should be determined by the appended claims.

## Claims

1. A positive active material comprising:
a lithium transition metal oxide particle having a portion of Li substituted by Na,
and comprising Ni and Co; and
a cobalt-containing coating layer arranged on a surface of the lithium transition metal oxide particle, wherein
the lithium transition metal oxide particle comprises a concentration gradient region, in which a concentration of Co decreases in a direction from the surface to the center of the particle.

2. The positive active material of claim 1, wherein in the concentration gradient region, a concentration of Ni increases in the direction from the surface of the lithium transition metal oxide particle to the center of the particle.

3. The positive active material of claim 1, wherein the concentration gradient region comprises a region extending to a distance of 500 nm from the surface to the center of the lithium transition metal oxide particle.

4. The positive active material of claim 1, wherein the lithium metal oxide particle comprises a lithium transition metal oxide represented by Formula 1:
Formula 1 Li₁₋ₓNaₓM_{1-(α+β+γ)}W_{α}Mg_{β}Ti_{γ}O₂₋ₐSₐ,
wherein in Formula 1,
M is one or more elements selected from alkali metal elements, alkaline earth metal elements, transition metal elements, post-transition metals, and non-metallic elements, other than W, Mg, Ti, Na, and S and
0<x≤0.01, 0<α≤0.01, 0<β≤0.005, 0<γ≤0.005, 0<a≤0.01, and 0<α+β+γ≤0.02.

5. The positive active material of claim 1, wherein in Formula 1, β and γ are 0<β≤0.003 and 0<γ≤0.003, respectively.

6. The positive active material of claim 1, wherein M is one or more elements selected from Ni, Co, Mn, Al, V, Ca, Zr, B, and P.

7. The positive active material of claim 1, wherein the lithium transition metal oxide is a single particle.

8. The positive active material of claim 1, wherein the lithium transition metal oxide is a single crystal.

9. The positive active material of claim 1, wherein the lithium transition metal oxide is represented by any one of Formulae 2 to 4:
Formula 2 Li_{1-x'}Na_{x'}Ni_{y1'}Co_{y2'}Mn_{y3'}W_{α'}Mg_{β'}Ti_{γ'}O_{2-a'}S_{a'}
Formula 3 Li_{1-x"}Na_{x"}Ni_{y1"}Co_{y2"}Al_{y3"}W_{α"}Mg_{β"}Ti_{γ"}O_{2-a"}S_{a"}
Formula 4 Li_{1-x‴}Na_{x‴}Ni_{y1‴}Co_{y2‴}W_{α‴}Mg_{β‴}Ti_{γ‴}O_{2-a‴}S_{a‴},
wherein in Formula 2,
0<x'≤0.01, 0<α'≤0.01, 0<β'≤0.005, 0<γ'≤0.005, 0<a'≤0.01, 0<α'+β'+γ'≤0.02, 0.48≤y1'<1, 0<y2' ≤0.2, 0<y3'≤0.3, and y1'+y2'+y3'+ α'+ β'+ γ'=1,
in Formula 3,
0<x"≤0.01, 0<α"≤0.01, 0<β"≤0.005, 0<γ"≤0.005, 0<a"≤0.01, 0<α"+β"+γ"≤0.02, 0.73≤y1"<1, 0<y2" ≤0.2, 0<y3"≤0.05, and y1"+y2"+y3"+ α"+ β"+ γ"=1,
and in Formula 4,
0<x‴≤0.01, 0<a‴≤0.01, 0<β‴≤0.005, 0<γ‴≤0.005, 0<a‴≤0.01, 0<α‴+β‴+γ‴≤0.02, 0.78≤y1‴<1, 0<y2‴ ≤0.2, and y1‴+y2‴+ α‴+ β‴+ γ‴=1.

10. The positive active material of claim 9, wherein
in Formula 2, 0<β'≤0.003, 0<γ'≤0.003, and 0<α'+β'+γ'≤0.016,
in Formula 3, 0<β"≤0.003, 0<γ"≤0.003, and 0<α"+β"+γ"≤0.016, and
in Formula 4, 0<β‴≤0.003, 0<γ‴≤0.003, and 0<α‴+β‴+γ‴≤0.016.

11. The positive active material of claim 1, wherein an average diameter (D₅₀) of the lithium transition metal oxide is 0.1 µm to 20 µm.

12. The positive active material of claim 1, wherein the coating layer comprises a cobalt-containing compound represented by Formula 5:
Formula 5 Liₓ₁Co_{y1}M'_{z1}Oₐ₁,
wherein in Formula 5,
M' is one or more transitionone or more transition metals other than Co, and
0.5<x1, 0<y1<1, 0<z1<1, and 1<a1<3.

13. The positive active material of claim 12, wherein 0.3≤y1/(y1+z1)<1.

14. The positive active material of claim 1, wherein the coating layer comprises a cobalt-containing compound represented by Formula 6:
Formula 6 Liₓ₁Co_{y1}Ni_{z11}M2_{z12}M3_{z13}O₂
wherein in Formula 6,
M2 and M3 are each independently one or more transitionone or more transition metals selected from Mn, B, Zr, P, Ca, Al, W, Mg, V and Ti, and
0.5<x1<1.1, 0.3≤y1<1, 0<z11≤0.7, 0≤z12<1, and 0≤z13<1.

15. A method of preparing a positive active material, comprising:
preparing a lithium transition metal oxide particle having a portion of Li substituted by Na, and comprising Ni and Co;
obtaining a positive active material precursor by mixing the lithium transition metal oxide particle and a Co-containing compound; and
obtaining a positive active material by calcining a precursor of a positive active material, wherein
the positive active material comprises a Co-containing coating layer on a surface thereof, and a concentration gradient region in which a concentration of Co decreases in a direction from the surface to the center of the particle.

16. The method of preparing a positive active material of claim 15, wherein the preparing of the lithium transition metal oxide particle comprises:
obtaining a precursor of a lithium transition metal oxide by mixing a Li-containing compound, a Na-containing compound, a W-containing compound, a Mg-containing compound, a Ti-containing compound, an M-containing compound, and an S-containing compound; and
heat-treating the precursor of the lithium transition metal oxide to obtain a positive active material comprising a lithium transition metal oxide particle represented by Formula 1:
Formula 1 Li₁₋ₓNaₓM_{1-(α+β+γ)}W_{α}Mg_{β}Ti_{γ}O₂₋ₐS_{a,}
wherein in Formula 1,
M is one or more elements selected from alkali metal elements, alkaline earth metal elements, transition metal elements, post-transition metal elements, and non-metallic elements, other than W, Mg, Ti, Na, and S and
0<x≤0.01, 0<α≤0.01, 0<β≤0.005, 0<γ≤0.005, 0<a≤0.01, and 0<α+β+γ≤0.02.

17. The method of preparing a positive active material of claim 16, wherein the mixing comprises mechanical mixing.

18. The method of preparing a positive active material of claim 16, wherein the heat-treating comprises a first heat treatment and a second heat treatment, and a heat treatment temperature of the first heat treatment is higher than a heat treatment temperature of the second heat treatment.

19. The method of preparing a positive active material of claim 15, wherein the calcining is performed at a temperature of 500 °C to 900 °C for 1 to 6 hours.

20. A lithium secondary battery comprising:
a positive electrode comprising the positive active material according to any one of claims 1 to 14;
a negative electrode; and
an electrolyte.
